# FASCICULE DE BREVET EUROPEEN

(11) **EP 1 611 217 B1**
(45) Date de publication et mention de la délivrance du brevet: **22.08.2007**
(21) Numéro de dépôt: 04723234.3
(22) Date de dépôt: 25.03.2004
(51) Int. Cl.: C09J 11/00, C09J 5/02

(54) **PROCEDE D' ASSEMBLAGE DE DEUX SUBSTRATS PAR COLLAGE, PROCEDE DE DEMONTAGE DE CET ASSEMBLAGE COLLE ET PRIMAIRE UTILISE**
VERFAHREN ZUM VERBINDEN ZWEIER SUBSTRATE, VERFAHREN ZUM AUFLÖSEN DES VERBUNDS SOWIE GRUNDIERUNGSMITTEL DAFÜR
METHOD FOR BONDING TOGETHER TWO SUBSTRATES, METHOD FOR DISASSEMBLING SAID BONDED ASSEMBLY AND PRIMER THEREFOR

(30) Priorité: 25.03.2003 FR 0303594
(43) Date de publication de la demande: 04.01.2006
(73) Titulaire: Rescoll, 33600 Pessac (FR)
(72) Inventeur: ALCORTA, José, F-33130 Begles (FR); PAPON, Eric, F-33350 Saint Magne de Castillon (FR); VILLENAVE, Jean-Jacques, F-33170 Gradignan (FR); DALET, Pierre, F-33210 Sauternes (FR)
(74) Mandataire: Fantin, Laurent
(86) Numéro de dépôt international: PCT/FR2004/050126
(87) Numéro de publication internationale: WO 2004/087829

(56) Documents cités:
- DE-A- 19 733 643

## Description

La présente invention concerne un procédé d'assemblage de deux substrats par collage et un procédé de démontage de cet assemblage collé.

L'invention couvre aussi le primaire nécessaire à la mise en oeuvre de ces procédés.

Dans l'industrie, il existe de plus en plus d'assemblages réalisés par collage avec des compositions parfaitement adaptées aux conditions nécessaires de résistance mécanique, de résistance aux températures subies et à de nombreux autres paramètres tant physiques que chimiques.

Les substrats ainsi collés donnent totale satisfaction dans l'assemblage résultant.

Par contre, le problème survient lorsque les substrats ainsi assemblés doivent être désolidarisés, par exemple en vue de changer l'un ou l'autre des substrats assemblés.

Contrairement aux liaisons mécaniques qui autorisent un démontage simple par vis ou rivet pour donner un exemple, il est difficile de démonter les substrats collés.

De plus, dans le cas du collage, si l'on assure un démontage il faut aussi prévoir le remontage d'un substrat nouveau en lieu et place du substrat défectueux. Les surfaces doivent alors être aptes à recevoir cette nouvelle liaison collée.

Les liaisons par collage sont réalisées en préparant les surfaces à lier par collage pour qu'elles présentent un état de surface adapté.

Le joint est disposé sur une des faces, les substrats sont positionnés et la polymérisation de la colle est réalisée par chauffage, par émission de rayonnements ou par un catalyseur associé pour donner des exemples. Les substrats sont ainsi solidarisés.

Si la séparation de cette liaison des deux substrats est mécanique en tentant de ne dégrader qu'un des deux substrats, on constate que dans la plupart des cas, au moins l'un des substrats est dégradé, voire les deux.

De plus, dans le cas où la séparation est réussie, le substrat conservé intact présente un état de surface qui interdit une nouvelle liaison par collage ou engendre pour le moins un travail important de traitement de surface.

Une solution consiste à prévoir une réversibilité contrôlée des liaisons collées avec trois moyens pour mettre en oeuvre cette réversibilité, par voie chimique, physico-chimique ou physique.

La voie chimique utilise des joints avec des bases polymères dont la structure peut être modifiée ou détruite par des actions extérieures telles que la chaleur, les rayonnements ou les champs électromagnétiques.

On peut ainsi disposer d'un polymère comportant une chaîne chimique avec des groupements aptes à former une chaîne par polymérisation sous l'action d'une longueur d'ondes donnée tandis que la séparation est obtenue, le moment venu, par dégradation de cette chaîne sous l'action d'une autre longueur d'ondes déterminée.

Néanmoins, de tels produits présentent des performances d'adhésion relativement faibles et se trouvent être liés à des applications très spécifiques.

On connaît des utilisations dans la fixation de composants électroniques, afin de permettre leur retrait et leur changement rapide mais on comprend aussi que les performances mécaniques requises par exemple sont faibles.

La voie physico-chimique consiste à associer des résines thermoplastiques aux résines thermodurcissables connues pour leurs performances mécaniques. Les thermoplastiques ayant la capacité de perdre une grande partie de leurs propriétés sous l'effet de la chaleur, la liaison par un joint comportant une combinaison d'un thermodurcissable et d'un thermoplastique peut s'avérer démontable par destruction du joint dans sa masse. Dans ce cas, le démontage est possible mais les deux substrats portent généralement une partie de ce joint dégradé et il faut au moins retirer la partie restante du joint sur le substrat à réutiliser.

On peut noter aussi que les performances des thermodurcissables sont affaiblies par la présence du thermoplastique et ceci d'autant plus que les substrats travaillent en température, même en restant éloigné des plages de températures de dégradation.

La voie physique consiste à introduire dans la composition adhésive elle-même, par ailleurs connue pour ses capacités d'adhésivité, des additifs capables, sous une stimulation extérieure, souvent la chaleur, de détruire la cohésion du joint dans sa masse.

Toute altération des conditions de réalisation du collage, notamment une augmentation de la viscosité ou l'introduction de charges en quantité importante, fragilise nécessairement la liaison.

On sait aussi que, dans certains cas, par exemple dans l'aéronautique, les colles sont homologuées et toute modification de la composition de ladite colle nécessite alors une nouvelle homologation qui peut s'avérer très lourde.

Il existe de nombreuses applications qui nécessitent la séparation de deux substrats collés et de plus en plus à des fins de recyclage. En effet, pour permettre le classement des matériaux de nature différente et leur recyclage indépendamment, par exemple une matière composite et un renfort métallique, il est nécessaire de procéder à ce type de séparation.

L'art antérieur prévoit ainsi systématiquement pour la séparation de deux substrats collés, la dégradation du joint assurant la liaison, dans sa masse.

Une illustration d'un tel art antérieur est la demande de brevet WO 00/75254 qui décrit un agencement avec un joint à base de polymère incluant des microcapsules contenant des agents d'expansion qui provoquent, sous l'action de la chaleur directe et en puissance suffisante, un ramollissement du joint et une décohésion du joint, facilitant ainsi le démontage. Une application particulière est le montage et le retrait de pare-brises de véhicules.

On note que de telles compositions incluant des microcapsules peuvent être utilisées en les intégrant dans le joint lui-même, dans la masse mais aucunement en interface comme cela sera décrit ultérieurement. L'épaisseur est trop importante et la régularité de dépose en couche mince impossible ou pour le moins très délicate à mettre en oeuvre.

On constate également dans ce type de joint à dégradation dans la masse que les microcapsules intégrées dans la masse peuvent générer des problèmes d'interface capsule/polymère et affecter les qualités mécaniques du joint lui-même.

Le but de la présente invention est de proposer un procédé de démontage de deux substrats collés qui permet de conserver le joint d'adhésif initial, de conserver les qualités des différents paramètres mécaniques, d'assurer la démontabilité sans dégrader l'un ou l'autre des substrats, de séparer les deux substrats en obtenant une surface d'au moins un des substrats, exempte de joint, éventuellement prête à être de nouveau assemblée à un nouveau substrat.

A cet effet le procédé d'assemblage selon l'invention d'un premier substrat et d'un second substrat par collage avec un joint se caractérise en ce qu'il consiste à réaliser la succession d'étapes suivantes :
- appliquer sur le premier substrat un primaire d'adhésion à démontabilité contrôlée comprenant une base polymère et au moins un agent de dégradation de la liaison dudit primaire avec le premier substrat ou de dégradation du primaire dans la masse,
- disposer un joint de matière polymère entre le primaire et le second substrat,
- presser les deux substrats l'un contre l'autre, et
- polymériser le joint pour obtenir l'assemblage collé des deux substrats.

Ce procédé d'assemblage comprend également la phase de démontage de cet assemblage collé, et consiste à réaliser la succession d'étapes suivantes :
i/ Collage :
   - appliquer sur le premier substrat un primaire d'adhésion à démontabilité contrôlée comprenant une base polymère et au moins un agent de dégradation de la liaison dudit primaire avec le premier substrat ou de dégradation du primaire dans la masse,
   - disposer un joint de matière polymère entre le primaire et le second substrat,
   - presser les deux substrats l'un contre l'autre, et
   - polymériser le joint pour obtenir l'assemblage collé des deux substrats.
ii/ Démontage :
   - apporter de l'énergie à destination de l'agent de dégradation incorporé dans la base polymère en sorte de provoquer la dégradation de la liaison dudit primaire avec le premier substrat ou la dégradation du primaire dans la masse,
   - séparer le premier substrat de l'ensemble joint/second substrat.

Le procédé prévoit de diluer le primaire d'adhésion afin d'appliquer une couche très mince dudit primaire sur le substrat à démonter.

L'invention couvre aussi le primaire comprenant :
- une base polymère ou une cire, et
- au moins un agent de dégradation de la liaison de la base polymère ou de la cire avec le substrat sur lequel la base est appliquée ou de dégradation dans la masse de cette même base.

Plus particulièrement l'agent de dégradation est du PTSH (paratoluènesulfohydrazide), notamment 0,5 et 30% de PTSH en poids de la base.

La base polymère contient au moins un agent de dégradation et elle est diluée à raison de 1 à 90% d'extrait sec dans un solvant.

Le procédé est notamment :
- réalisation d'une composition A avec du DGEBA (Diglycidyl bisphénol A) et de la DETA (Diéthylènetriamine),
- ajout de 1 à 30% de PTSH en poids à cette composition pour obtenir la composition B, et
dilution de 10 à 90% d'extrait sec de la composition B dans du toluène. L'invention est maintenant décrite en détail suivant un mode de réalisation particulier, non limitatif, avec des tableaux de résultats disposés en annexe sur des planches de dessins comportant les figures :
- figure 1 : Représentation schématique d'une liaison,
- figure 2 : Tableau des valeurs de contraintes maximales à la rupture, et
- figure 3 : Tableau des valeurs de contraintes maximales à la rupture en fonction de la concentration en agent de dégradation.

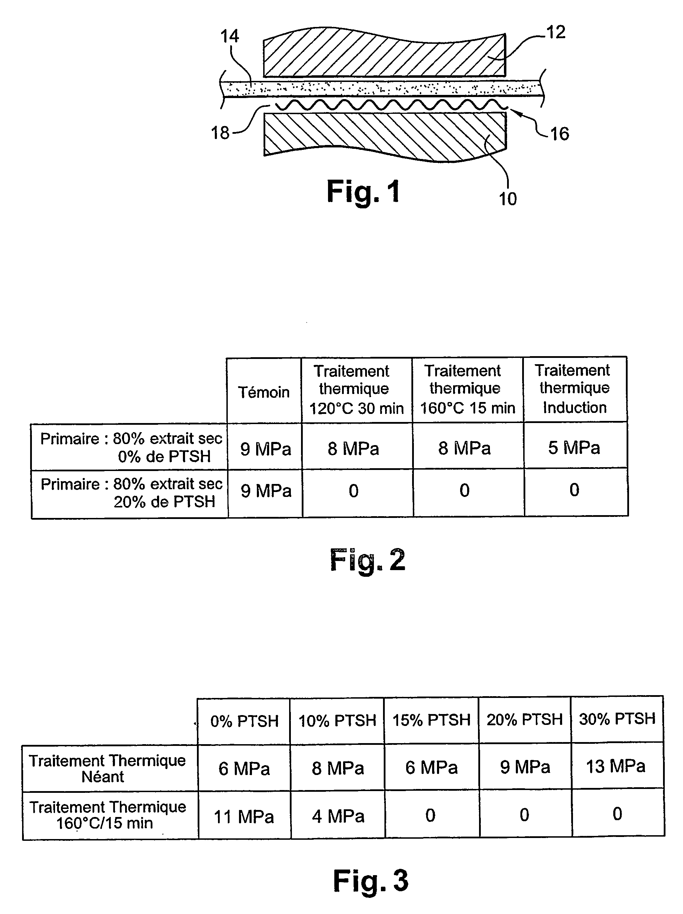

Le procédé selon la présente invention consiste à réaliser un assemblage d'un premier substrat 10 et d'un second substrat 12 en interposant au moins un joint 14 adhésif, comme montré sur la figure 1.

Ce joint peut être de type connu à base de résine acrylique, époxy, polyuréthane ou élastomère et la procédure de mise en oeuvre est conservée.

Le procédé de collage et de démontabilité contrôlée consiste à prévoir une couche 16 d'un primaire 18 d'adhésion à démontabilité contrôlée, disposée au moins à l'une des interfaces substrat 10 ou 12 et joint 14.

Ce primaire d'adhésion à démontabilité contrôlée est destiné à revêtir la face de l'un des substrats 10 ou 12.

Il s'agit d'une composition polymère compatible avec l'adhésif utilisé ultérieurement et permettant d'établir des liaisons avec la surface dudit substrat.

Le primaire d'adhésion est fortement dilué en sorte de permettre le dépôt en couche mince et comprend de ce fait peu de matière sèche. L'apport de matière par le primaire d'adhésion reste très limité par rapport à l'assemblage et au joint.

Les résidus sont d'autant plus limités que l'apport de matière est réduit.

Un tel primaire d'adhésion comprend selon un premier mode de réalisation une base polymère incluant un agent de décohésion agissant dans la masse.

Comme exemple, on peut citer comme résine de base une résine époxy contenant comme agent de polymérisation une amine.

Ce primaire est déposé en couche mince sur le premier substrat 10.

Après durcissement, le joint 14 est déposé par exemple sur le primaire ainsi durci et le second substrat 12 est rapporté sur ledit joint.

Après polymérisation, les deux substrats sont solidarisés par collage.

Lorsque les deux substrats doivent être séparés, le chauffage de l'interface provoque la dégradation de la chaîne époxy initiée par l'amine, induisant la dégradation dans la masse de la résine époxy et de ses capacités d'adhésion.

Le premier substrat se trouve libéré du joint 14 qui reste lié au second substrat auquel il est directement adhésivé.

Il convient de déterminer préalablement le substrat que l'on souhaite conserver pour une utilisation ultérieure.

Un autre mode de réalisation consiste à recourir à une base polymère incluant du paratoluènesulfohydrazide ou PTSH.

Dans ce cas, le PTSH migre dans la matrice constituant le primaire jusqu'à l'interface entre le primaire et le substrat, plus particulièrement pour les substrat peu poreux. A cet interface, il se produit une volatilisation et l'expansion provoque la rupture de la liaison du primaire et du substrat.

On peut donner un exemple de composition et de tests montrant les performances mécaniques mesurées.

La composition A comprend 100 de DGEBA (Diglycidyl bisphénol A) et 11 de DETA (Diéthylènetriamine).

On ajoute à cette composition B de 1 à 30% de PTSH en poids pour obtenir une composition B.

On réalise ensuite la composition C par dilution de 10 à 90% d'extrait sec de la composition B dans du toluène.

Cette composition constitue le primaire d'adhésion à démontabilité contrôlé.

Pour réaliser les tests dont les résultats sont regroupés dans le tableau de la figure 2, on utilise ce primaire d'adhésion qui est déposé sur une éprouvette en aluminium traitée préalablement et de façon connue dans un bain sulfochromique de décapage.

Le primaire est polymérisé par passage à l'étuve à 65°C pendant une heure.

Un joint d'adhésif époxyde est déposé sur une autre éprouvette également traitée préalablement et de façon connue dans un bain sulfochromique de décapage.

Les deux éprouvettes sont alors pressées l'une contre l'autre en attente de la réticulation complète de la résine époxyde.

Les mesures de contrainte maximale à la rupture sans traitement thermique de démontage avec un primaire sans PTSH ou chargé de 20% de PTSH ne sont aucunement modifiées.

Si l'on considère l'assemblage soumis à une traitement thermique avec un primaire ne comportant pas de PTSH, on constate que les contraintes maximales diminuent lentement passant de 9 MPa à 8 MPa après un traitement de 30 min à 120°C. D'ailleurs, la prolongation de la durée du traitement thermique ne provoque pas de variation sensible et la contrainte reste à 8 MPa.

Dans le cas d'un traitement thermique par inducteur, le primaire sans PTSH perd une partie de ses propriétés mais moins de la moitié de perte de contrainte maximale à la rupture.

Par contre, le primaire à 80% d'extrait sec et 20% de PTSH perd l'intégralité de sa résistance maximale à la rupture dès le premier cycle de température à 120°C pendant 30 min. L'augmentation de la température et le raccourcissement de la durée n'ont pas plus d'influence, la contrainte de résistance à la rupture étant également rapidement nulle.

Le chauffage par un inducteur provoque la même diminution de la contrainte maximale à la rupture.

Une telle composition incluant la PTSH conduit en application sous forme de primaire à une démontabilité efficace.

Des tests de la proportion d'adhésif représentés sur la figure 3 montrent que, dès la présence de 10% de PTSH, on obtient le phénomène de démontabilité et que le résultat n'est pas dose dépendant puisque l'augmentation à 15%, 20% ou 30% de PTSH ne provoque pas plus vite la perte de contrainte maximale à la rupture. La quantité de primaire est très limitée et la quantité d'agent actif permettant la démontabilité est lui-même en quantité très réduite, ce qui conduit à un rapport quantité de matière agent / quantité de matière joint très faible.

On constate que le procédé selon la présente invention permet de conserver la fonction collage et de recourir aux produits de synthèse connus qui permettent de la réaliser et de prévoir une démontabilité en recourant au primaire selon la présente invention.

Il est à remarquer que l'un des autres avantages conféré par un tel primaire d'adhésion est le coût réduit puisque le primaire requiert peu de matière active, ce qui rend aussi son utilisation plus courante et contribue ainsi à rendre les assemblages plus aisément démontables, suscitant d'autant plus le recyclage.

## Revendications

1. Procédé d'assemblage d'un premier substrat (10) et d'un second substrat (12) par collage avec un joint (14), **caractérisé en ce qu'**il consiste à réaliser la succession d'étapes suivantes :
- appliquer sur le premier substrat (10) un primaire (18) d'adhésion à démontabilité contrôlée comprenant une base polymère et au moins un agent de dégradation de la liaison dudit primaire avec le premier substrat ou de dégradation du primaire dans la masse,
- disposer un joint (14) de matière polymère entre le primaire et le second substrat (12),
- presser les deux substrats (10,12) l'un contre l'autre, et
- polymériser le joint (14) pour obtenir l'assemblage collé des deux substrats (10, 12).

2. Procédé d'assemblage d'un premier substrat (10) et d'un second substrat (12) par collage avec un joint (14) et de démontage de cet assemblage collé, **caractérisé en ce qu'**il consiste à réaliser la succession d'étapes suivantes :
i/ Collage :
- appliquer sur le premier substrat (10) un primaire (18) d'adhésion à démontabilité contrôlée comprenant une base polymère et au moins un agent de dégradation de la liaison dudit primaire avec le premier substrat ou de dégradation du primaire dans la masse,
- disposer un joint (14) de matière polymère entre le primaire et le second substrat (12),
- presser les deux substrats (10, 12) l'un contre l'autre, et
- polymériser le joint (14) pour obtenir l'assemblage collé des deux substrats (10, 12).
ii/ Démontage :
- apporter de l'énergie à destination de l'agent de dégradation incorporé dans la base polymère en sorte de provoquer la dégradation de la liaison dudit primaire avec le premier substrat ou la dégradation du primaire dans la masse,
- séparer le premier substrat (10) de l'ensemble joint (14)/second substrat (12).

3. Procédé d'assemblage d'un premier substrat (10) et d'un second substrat (12) par collage avec un joint (14) et de démontage de cet assemblage collé selon la revendication 1 ou 2, **caractérisé en ce qu'**il consiste à diluer le primaire (18) d'adhésion afin d'appliquer une couche très mince dudit primaire sur le substrat à démonter.

4. Primaire pour la mise en oeuvre du procédé selon l'une des revendications 1, 2 ou 3, **caractérisé en ce qu'**il comprend :
- une base polymère ou une cire, et
- au moins un agent de dégradation de la liaison de la base polymère ou de la cire avec le substrat sur lequel la base est appliquée ou de dégradation dans la masse de cette même base.

5. Primaire selon la revendication 4, **caractérisé en ce qu'**il comprend une base polymère et **en ce que** l'agent de dégradation est du PTSH (paratoluènesulfohydrazide).

6. Primaire selon la revendication 5, **caractérisé en ce qu'**il comprend entre 0,5 et 30% de PTSH en poids de la base.

7. Primaire selon l'une des revendications 4, 5 ou 6, **caractérisé en ce que** la base polymère contenant au moins un agent de dégradation est diluée à raison de 1 à 90% d'extrait sec dans un solvant.

8. Primaire selon la revendication 5, 6 ou 7, **caractérisé en ce qu'**il est obtenu par la succession d'étapes suivantes :
- réalisation d'une composition A avec du DGEBA (Diglycidyl bisphénol A) et de la DETA (Diéthylènetriamine),
- ajout de 1 à 30% de PTSH en poids à cette composition pour obtenir la composition B, et
- dilution de 10 à 90% d'extrait sec de la composition B dans du toluène.

## Claims

1. A method of assembling a first substrate (10) and a second substrate (12) by adhesive bonding with a joint (14), **characterised in that** it comprises performing the following succession of steps:
- applying to the first substrate (10) an adhesion primer (18) with controlled removability, comprising a polymer base and at least one agent for degradation of the bond of said primer with the first substrate or degradation of the primer in the mass,
- disposing a joint (14) of polymer material between the primer and the second substrate (12),
- pressing the two substrates (10, 12) against each other, and
- polymerising the joint (14) in order to obtain the bonded assembly of the two substrates (10, 12).

2. A method of assembling a first substrate (10) and a second substrate (12) by bonding with a joint (14) and of dismantling the bonded assembly, **characterised in that** it comprises of performing the following succession of steps:
(i) bonding:
- applying to the first substrate (10) an adhesion primer (18) with controlled removability, comprising a polymer base and at least one agent for degradation of the bond of said primer with the first substrate or degradation of the primer in the mass,
- disposing a joint (14) of polymer material between the primer and the second substrate (12),
- pressing the two substrates (10, 12) against each other, and
- polymerising the joint (14) in order to obtain the bonded assembly of the two substrates (10, 12).
(ii) dismantling:
- providing energy intended for the degradation agent incorporated in the polymer base so as to cause the degradation of the bond of said primer with the first substrate or the degradation of the primer in the mass,
- separating the first substrate (10) from the assembly formed of joint (14) and second substrate (12).

3. A method of assembling a first substrate (10) and a second substrate (12) by bonding with a joint (14) and of dismantling this bonded assembly according to claim 1 or 2, **characterised in that** it comprises diluting the adhesion primer (18) in order to apply a very thin layer of said primer to the substrate to be removed.

4. A primer for implementing a method according to one of claims 1, 2 or 3, **characterised in that** it comprises:
- a polymer base or a wax, and
- at least one agent for degradation of the bond of the polymer base or wax with the substrate to which the base is applied or a degradation of the same base in the mass.

5. A primer according to claim 4, **characterised in that** it comprises a polymer base and **in that** the degradation agent is PTSH (paratoluenesulfohydrazide).

6. A primer according to claim 5, **characterised in that** it comprises between 0.5% and 30% PTSH in terms of weight of the base.

7. A primer according to one of the claims 4, 5 or 6, **characterised in that** the polymer base containing at least one degradation agent is diluted to the extent of 1% to 90% dry extract in a solvent.

8. A primer according to claim 5, 6 or 7, **characterised in that** it is obtained by the following succession of steps:
- producing a composition A with DGEBA (Diglycidylbisphenol A) and DETA (Diethylenetriamine),
- adding from 1% to 30% by weight of PTSH to this composition in order to obtain composition B, and
- diluting of 10% to 90% of dry extract of composition B in toluene.

## Patentansprüche

1. Verfahren zum Zusammenfügen eines ersten Trägers (10) und eines zweiten Trägers (12) durch Kleben mit einer Verbindung (14), **dadurch gekennzeichnet, dass** es darin besteht, die folgenden Schritte nacheinander auszuführen:
- Aufbringen auf den ersten Träger (10) eines Haftprimers (18) zum gesteuerten Abnehmen, umfassend eine Polymergrundlage und mindestens ein Mittel zur Degradation der Bindung des Primers an dem ersten Träger oder zur Degradation des Primers in der Masse,
- Anordnen einer Verbindung (14) aus Polymer zwischen dem Primer und dem zweiten Träger (12),
- Zusammendrücken der beiden Träger (10, 12) und
- Aushärten der Verbindung (14), um die Klebeverbindung der beiden Träger (10, 12) zu erzielen.

2. Verfahren zum Zusammenfügen eines ersten Trägers (10) und eines zweiten Trägers (12) durch Kleben mit einer Verbindung (14) und zum Lösen dieser Klebeverbindung, **dadurch gekennzeichnet, dass** es darin besteht, die folgenden Schritte nacheinander auszuführen:
i/ Kleben:
- Aufbringen auf den ersten Träger (10) eines Haftprimers (18) zum gesteuerten Abnehmen, umfassend eine Polymergrundlage und mindestens ein Mittel zur Degradation der Bindung des Primers an dem ersten Träger oder zur Degradation des Primers in der Masse,
- Anordnen einer Verbindung (14) aus Polymer zwischen dem Primer und dem zweiten Träger (12),
- Zusammendrücken der beiden Träger (10, 12) und
- Aushärten der Verbindung (14), um die Klebeverbindung der beiden Träger (10, 12) zu erzielen;
ii/Lösen:
- Zuführen von Energie an das in die Polymergrundlage eingearbeitete Degradationsmittel derart, dass die Bindung des Primers an dem ersten Träger oder der Primer in der Masse degradiert wird,
- Trennen des ersten Trägers (10) von der Einheit Verbindung (14)/ zweiter Träger (12).

3. Verfahren zum Zusammenfügen eines ersten Trägers (10) und eines zweiten Trägers (12) durch Kleben mit einer Verbindung (14) und zum Lösen dieser Klebeverbindung nach Anspruch 1 oder 2, **dadurch gekennzeichnet, dass** es darin besteht, den Haftprimer (18) aufzulösen, um auf den abzunehmenden Träger eine sehr dünne Schicht des Primers aufzubringen.

4. Primer zur Durchführung des Verfahrens nach einem der Ansprüche 1, 2 oder 3, **dadurch gekennzeichnet, dass** dieser
- eine Polymergrundlage oder ein Wachs und
- mindestens ein Mittel zur Degradation der Bindung zwischen der Polymergrundlage oder des Wachses und dem Träger, auf dem die Grundlage aufgebracht ist, oder ein Mittel zur Degradation dieser Grundlage in der Masse umfasst.

5. Primer nach Anspruch 4, **dadurch gekennzeichnet, dass** er eine Polymergrundlage umfasst und dass das Degradationsmittel PTSH (Paratoluol-Sulfohydrazid) ist.

6. Primer nach Anspruch 5, **dadurch gekennzeichnet, dass** er zwischen 0,5 und 30 Gew.-% PTSH bezogen auf die Grundlage umfasst.

7. Primer nach einem der Ansprüche 4, 5 oder 6, **dadurch gekennzeichnet, dass** 1 bis 90 % Trockenextrakt der mindestens ein Degradationsmittel enthaltenden Polymergrundlage in einem Lösungsmittel gelöst ist.

8. Primer nach einem der Ansprüche 5, 6 oder 7, **dadurch gekennzeichnet, dass** er durch folgende nacheinander auszuführenden Schritte erhalten wird:
- Vorbereiten einer Zusammensetzung A mit DGEBA (Diglycidylether von Bisphenol A) und mit DETA (Diethylentriamin),
- Zugeben von 1 bis 30 Gew.-% PTSH zu dieser Zusammensetzung, um die Zusammensetzung B zu erhalten, und
- Verdünnen von 10 bis 90 % Trockenextrakt der Zusammensetzung B in Toluol.
